# EUROPEAN PATENT APPLICATION

(11) **EP 2 922 295 A1**
(43) Date of publication of application: **23.09.2015**
(21) Application number: 15159820.8
(22) Date of filing: 19.03.2015
(51) Int. Cl.: H04N 13/04

(54) **A SYSTEM FOR FORMING STEREOSCOPIC IMAGES**

(30) Priority: 21.03.2014 US 201414221436
(71) Applicant: Christie Digital Systems USA, Inc., Cypress, CA 90630 (US)
(72) Inventor: Guthrie, Simon, KITCHENER, Ontario N2B 3K4 (CA); Vieth, John, KITCHENER, Ontario N2G 4Y7 (CA)
(74) Representative: Franzolin, Luigi

(57) **Abstract**

A system for forming stereoscopic images is provided, comprising: a first set of materials configured to emit light comprising a first set of primary colours when excited; a second set of materials configured to emit further light comprising a second set of primary colours when excited, the first and second sets of primary colours corresponding to one another, respective wavelengths of a given primary colour in each of the sets different from one another; one or more light sources configured to irradiate the sets of materials with an excitation wavelength so that both sets of primary colours are emitted; and, a light modulator positioned for irradiation by both sets of primary colours, the light modulator configured to form a first image from the first set of primary colours and a second image from the second set of primary colours.

## Description

### FIELD

The specification relates generally to light generation systems, and specifically to a system for forming stereoscopic images.

### BACKGROUND

Backlights for liquid crystal display (LCD) panels provide white light composed of all colours. The LCD then splits this into red green and blue light (RGB light) and modulates it. This backlight could be a cold cathode fluorescent lamp (CCFL), or more recently, an array of light emitting diodes (LEDs). LEDs often use a phosphor to down-convert short-wavelength blue or ultraviolet (UV) light to make the broad white spectrum. However, such white light can be challenging to use when forming three-dimensional images without additional manipulation of the white light, for example to form the white light into light of different polarization states.

### SUMMARY

In general, this disclosure is directed to a system for forming stereoscopic images that can be viewed as three-dimensional (3D) images. The system includes one or more light sources and at least two sets of materials, that can include, but is not limited to, quantum dots, the one or more light sources emitting light for exciting the two sets of materials, and the two sets of materials each emitting a respective set of primary colours, which are similar, but have different wavelengths: for example, the first set of materials can emit red light, blue light and green light, while the second set of materials can also emit red light, blue light and green light, but at different wavelengths than the first set of materials (i.e. a different red, a different green and a different blue). The primary colours from each of the material sets can be used to alternately irradiate an image modulator, which can alternately form left eye images and right eye images, which can be received at filters worn by a user. The filter for the left eye transmits the left eye image and blocks the right eye image, while the filter for the right eye transmits the right eye image and blocks the left eye image; hence, 3D images are formed and perceived by the user. The transmitting and blocking can occur using dichroics, absorption filters and the like, which can be tuned to each of the wavelengths of the primary colours emitted by the materials. Dichroics are, however particularly useful as the output of quantum dots is very specific to a given wavelength, with a narrow bandwidth, the respective reds, greens and blues in each set of primary colours can be close together so that the human eye perceives little, or no, difference between them; while dichroic filters, which can be tuned to precise wavelengths and bandwidths, can still distinguish there between.

Various schemes can be used to improve perceived flicker, for example by alternating combining two primary colours from the first set of quantum dots with a complimentary primary colour from the second set of quantum dots, and combining the other two primary colours from the second set of quantum dots with the complimentary primary colour from the first set of quantum dots; the two colour sets can alternately irradiate the light modulator, where pixels specific to each primary colour are modulated to form a portion of each of the left eye image and the right eye image accordingly simultaneously and/or in conjunction with one another.

In this specification, elements may be described as "configured to" perform one or more functions or "configured for" such functions. In general, an element that is configured to perform or configured for performing a function is enabled to perform the function, or is suitable for performing the function, or is adapted to perform the function, or is operable to perform the function, or is otherwise capable of performing the function.

It is understood that for the purpose of this specification, language of "at least one of X, Y, and Z" and "one or more of X, Y and Z" can be construed as X only, Y only, Z only, or any combination of two or more items X, Y, and Z (e.g., XYZ, XYY, YZ, ZZ, and the like). Similar logic can be applied for two or more items in any occurrence of "at least one ..." and "one or more..." language.

A first aspect of the specification provides a system comprising: a first set of materials configured to emit light comprising a first set of primary colours when excited; a second set of materials configured to emit further light comprising a second set of primary colours when excited, the first set of primary colours and the second set of primary colours corresponding to one another, respective wavelengths of a given primary colour in each of the first set of primary colours and the second set of primary colours different from one another; one or more light sources configured to irradiate the first set of materials and the second set of materials with an excitation wavelength so that the first set of primary colours and the second set of primary colours are emitted; and, a light modulator positioned for irradiation by the first set of primary colours and the second set of primary colours, the light modulator configured to form a first image from the first set of primary colours and a second image from the second set of primary colours.

The one or more light sources can comprise: a first light source configured to irradiate the first set of materials with the excitation wavelength and a second light source configured to irradiate the second set of materials with the excitation wavelength, wherein the first light source can be different from the second light source or the first light source can comprise the second light source. The system can further comprise a computing device configured to control the first light source and the second light source to alternate irradiating the first set of materials and the second set of materials; and synchronize the light modulator with the first light source and the second light source to form the first image when being illuminated by the first set of primary colours and form the second image when being illuminated by the second set of primary colours.

The first image can comprise one of a left eye image and a right eye image, and the second image can comprise the other of the left eye image and the right eye image.

The system can further comprise at least one pair of eyewear comprising a first lens configured to transmit the first set of primary colours and block the second set of primary colours, and a second lens configured to transmit the second set of primary colours and block the first set of primary colours, the first lens comprising one of a left eye lens and a right eye lens, and the second lens comprising the other of the left eye lens and the right eye lens. Each of the first lens and the second lens can comprise a respective dichroic filter each configured to filter respective wavelengths.

The first set of materials can comprise: a first material subset configured to emit a first primary colour; a second material subset configured to emit a second primary colour; and a third material subset configured to emit a third primary colour; and, the second set of materials can comprise: a first respective material subset configured to emit a first respective primary colour; a second respective material subset configured to emit a second respective primary colour; and a third respective material subset configured to emit a third respective primary colour. The light modulator can comprise: a first subset of pixels for modulating the first primary colour and the first respective primary colour to form respective first sub-images of the first image and the second image; a second subset of pixels for modulating the second primary colour and the second respective primary colour to form respective second sub-images of the first image and the second image; and, a third subset of pixels for modulating the third primary colour and the third respective primary colour to form respective third sub-images of the first image and the second image. The one or more light sources comprise: one or more first light sources configured to irradiate the first material subset and the second material subset; and, a second light source configured to irradiate the third material subset; and, one or more third light sources configured to irradiate the first respective material subset and the second respective material subset; and, a fourth light source configured to irradiate the third respective material subset, each of the one more first light sources, the second light source, the one or more third light sources, and the fourth light source operable independent of each other. The system can further comprise a computing device configured to: control the one or more light sources to alternate between: irradiating the first material subset and the second material subset with the one or more first light sources, and irradiating the third respective material subset with the fourth light source to produce the first primary colour and the second primary colour from the first set of materials, and the third respective primary colour from the second set of materials; and, irradiating the first respective material subset and the second respective material subset with the one or more third light sources, and irradiating the third material subset with the second light source to produce the first respective primary colour and the second respective primary colour from the second set of materials, and the third primary colour from the first set of materials; and, synchronize the light modulator with one or more light sources to alternate between: modulating the first subset of pixels to form a first sub-image of the first image, modulating the second subset of pixels to form a second sub-image of the first image, and modulating the third subset of pixels to form a respective third sub-image of the second image, when the light modulator is illuminated by the first primary colour and the second primary colour from the first set of materials, and the third respective primary colour from the second set of materials; and, modulating the first subset of pixels to form a respective first sub-image of the second image, modulating the second subset of pixels to form a respective second sub-image of the second image, and modulating the third subset of pixels to form a third sub-image of the first image, when the light modulator is illuminated by the first respective primary colour and the second respective primary colour from the second set of materials, and the third primary colour from the first set of materials.

The one or more light sources can comprise a plurality of light sources in a one-to-one relationship with each colour in the first set of primary colours and the second set of primary colours.

The first set of primary colours can comprise: a first red, a first green, and a first blue; and the second set of primary colours can comprise: a second red, different from the first red, a second green, different from the first green, and a second blue, different from the first blue.

The light modulator can comprise a digital micromirror device (DMD), and system further can comprise optics configured to convey the first set of primary colours and the second set of primary colours to reflect from the DMD to form the first image and the second image.

The light modulator can comprise a liquid crystal device (LCD), and system further can comprise optics configured to convey the first set of primary colours and the second set of primary colours to transmit through the LCD to form the first image and the second image.

The one or more light sources can comprise at least one of: a light emitting diode, a blue light emitting diode, a laser, a blue light emitting laser, and light source that emits light at a wavelength shorter than respective wavelengths of the first primary colours and the second primary colours.

Each of the first set of materials and the second set of materials can comprise one or more of: one or more wavelength-conversion materials that absorbs one wavelength and emits another wavelength; quantum dots; and, nanocrystals.

### BRIEF DESCRIPTIONS OF THE DRAWINGS

For a better understanding of the various implementations described herein and to show more clearly how they may be carried into effect, reference will now be made, by way of example only, to the accompanying drawings in which:
Fig. 1 depicts a schematic block diagram of a system for forming stereoscopic images, according to non-limiting implementations.
Fig. 2 depicts a graph of intensity vs. wavelength of light emitted by quantum dots and light sources of the system of Fig. 1, according to non-limiting implementations.
Fig. 3 depicts the system of Fig. 1 in operation, according to non-limiting implementations.
Fig. 4 depicts a user-centric schematic view of the system of Fig. 1, according to non-limiting implementations.
Fig. 5 which depicts a transmission profile of a first lens of eye-wear of the user-centric schematic view of the system of Fig. 1, according to non-limiting implementations.
Fig. 6 which depicts a transmission profile of a second lens of eye-wear of the user-centric schematic view of the system of Fig. 1, according to non-limiting implementations.
Fig. 7 depicts a schematic block diagram of an alternative system for forming sterioscopic images, according to non-limiting implementations.
Fig. 8, which depicts schematic details of a light modulator of the system of Fig. 7, according to non-limiting implementations.
Fig. 9 depicts the system of Fig. 7 in operation in a first mode, according to non-limiting implementations.
Fig. 10 depicts the system of Fig. 7 in operation in a second mode, according to non-limiting implementations.
Fig. 11 depicts a user-centric schematic view of the system of Fig. 7, according to non-limiting implementations.

### DETAILED DESCRIPTION

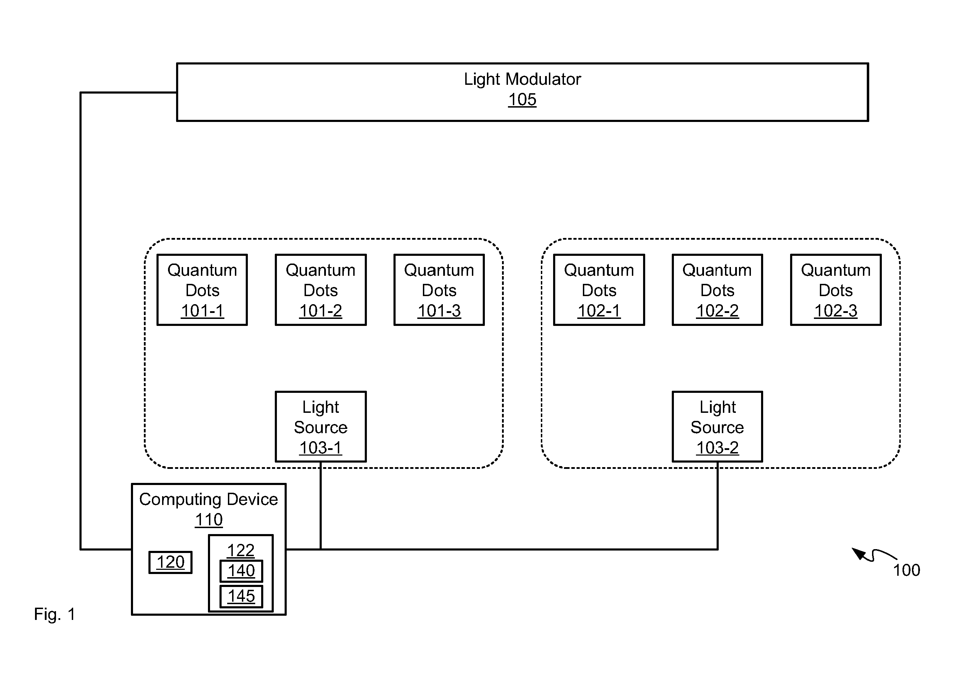

Fig. 1 depicts a system 100 comprising: a first set of quantum dots 101-1, 101-2, 101-3 configured to emit light comprising a first set of primary colours when excited; a second set of quantum dots 102-1, 102-2, 102-3 configured to emit further light comprising a second set of primary colours when excited, the first set of primary colours and the second set of primary colours corresponding to one another, respective wavelengths of a given primary colour in each of the first set of primary colours and the second set of primary colours different from one another, as described in more detail below. However, it is appreciated that one or more to first set of quantum dots 101-1, 101-2, 101-3 and second set of quantum dots 102-1, 102-2, 102-3 could be replaced with any one or more wavelength-conversion materials that absorbs one wavelength and emits another wavelength, including but not limited to light emitting nanocrystals. Hence, while the present specification makes reference to quantum dots configured to emit light comprising a respective set of primary colours when excited, and the like, any reference thereto could be replaced with materials configured to emit light comprising a respective set of primary colours when excited.

System 300 further comprises one or more light sources 103-1, 103-2 configured to irradiate first set of quantum dots 101-1, 101-2, 101-3 and second set of quantum dots 102-1, 102-2, 102-3 with an excitation wavelength so that the first set of primary colours and the second set of primary colours are emitted; and, a light modulator 105 positioned for irradiation by the first set of primary colours and the second set of primary colours, light modulator 105 configured to form a first image from the first set of primary colours and a second image from the second set of primary colours, as described in more detail below. As depicted, system 100 further comprises a computing device 110 in communication with one or more light sources 103-1, 103-2 and light modulator 105, computing device 110 configured to control one or more light sources 103-1, 103-2, and light modulator 105 as described in more detail below.

First set of quantum dots 101-1, 101-2, 101-3 will be interchangeably referred to, collectively, hereafter as quantum dots 101, and generically as quantum dots 101; similarly, second set of quantum dots 102-1, 102-2, 102-3 will be interchangeably referred to, collectively, hereafter as quantum dots 102, and generically as quantum dots 102. One or more light sources 103-1, 103-2 will be interchangeably referred to, collectively, hereafter as light sources 103, and generically as a light source 103.

First set of quantum dots 101 generally comprises: a first quantum dot subset 101-1 configured to emit a first primary colour; a second quantum dot subset 101-2 configured to emit a second primary colour; and a third quantum dot subset 101-3 configured to emit a third primary colour. Similarly, second set of quantum dots 102 comprises: a first respective quantum dot subset 102-1 configured to emit a first respective primary colour; a second respective quantum dot 102-2 subset configured to emit a second respective primary colour; and a third respective quantum dot subset 102-3 configured to emit a third respective primary colour. While three respective subsets of quantum dots are described here, for each set of quantum dots 102-1, 102-2, in other implementations, more than three subsets of quantum dots can be used, for example in systems that use four (or more) primary colours, rather than three primary colours.

In other words, each set of quantum dots 101, 102 comprises respective quantum dots configured to emit light of primary colours, for example red, green and blue, but at slightly different wavelengths. For example, each of quantum dots 101-1, 102-1 can be configured to emit blue light, but at slightly different wavelengths, each of quantum dots 101-2, 102-2 can be configured to emit green light, but at slightly different wavelengths, and each of quantum dots 101-3, 102-3 can be configured to emit red light, but at slightly different wavelengths, as described in more detail below.

In depicted implementations, one or more light sources 103 comprises: a first light source 103-1 configured to irradiate first set of quantum dots 101 with the excitation wavelength, hence light source 103-1 and first set of quantum dots 101 are depicted as grouped together via a stippled line; and, a second light source 103-2 configured to irradiate second set of quantum dots 102 with the excitation wavelength, hence light source 103-2 and second set of quantum dots 102 are also depicted as grouped together via respective stippled line. In other words, light source 103-1 is located and/or positioned and/or configured to irradiate quantum dots 101 with an excitation wavelength; and light source 103-2 is located and/or positioned and/or configured to irradiate quantum dots 102 with the excitation wavelength.

However, in other implementations, system 100 can comprise one light source 103, and a mirror device, or the like, controlled by computing device 110 to switch the excitation wavelength emitted by the one light source between irradiating quantum dots 101 and quantum dots 102.

Alternatively, one or more light sources 103 can comprise one or more light sources for irradiating each respective subset of quantum dots 101-1, 101-2, 101-3, 102-1, 102-2, 102-3, for example in a one-to-one relationship. Alternatively, one or more light sources 103 can comprise one or more light sources for irradiating two or more subsets of quantum dots 101-1, 101-2, 101-3, 102-1, 102-2, 102-3, and further light sources for irradiating the remaining subsets of quantum dots 101-1, 101-2, 101-3, 102-1, 102-2, 102-3.

Each of light sources 103 can comprise one or more of: a light emitting diode (LED) configured to emit light less than or equal to wavelengths emitted by quantum dots 101, 102, and/or a blue LED, and/or a laser configured to emit light less than or equal to wavelengths emitted by quantum dots 101, 102, and/or a blue laser, and light source that emits light at a wavelength shorter than respective wavelengths of the first primary colours and the second primary colours.

Light modulator 105 can comprise a digital micromirror device (DMD); in these implementations, system 100 further comprises optics (not depicted) configured to convey the first set of primary colours and the second set of primary colours to reflect from the DMD to form the first image and the second image. In these implementations, system 100 can further comprise projection optics for projecting the first image and the second image onto a screen; such implementations can also comprise the screen.

Alternatively, light modulator 105 can comprise a liquid crystal device (LCD); in these implementations, system further comprises optics (not depicted) configured to convey the first set of primary colours and the second set of primary colours to transmit through the LCD to form the first image and the second image. For example, the optics can comprise a light diffuser located behind the LCD, and quantum dots 101, 102 can be located at edges of the light diffuser.

Computing device 110 can comprise a processor 120, a memory 122, and alternatively a communication interface and/or input device (not depicted), memory 122 storing image data 140, image data 140 generally comprising images which can be formed by pixels of image modulator 105. Memory 122 further stores an application 145 that, when processed by processor 120, enables processor 120 to: control first light source 103-1 and second light source 103-2 to alternate irradiating first set of quantum dots 101 and second set of quantum dots 102; and synchronize light modulator 105 with first light source 103-1 and second light source 103-2 to form a first image when being illuminated by the first set of primary colours and form a second image when being illuminated by the second set of primary colours, as described in further detail below.

Furthermore, memory 122 storing application 145 is an example of a computer program product, comprising a non-transitory computer usable medium having a computer readable program code adapted to be executed to implement a method, for example a method stored in application 145.

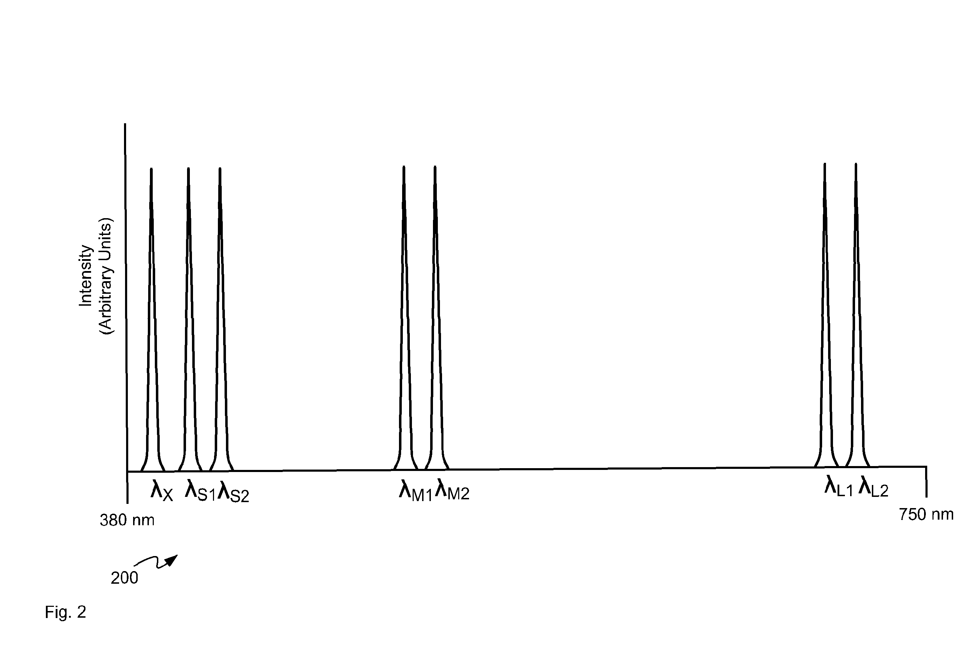

Attention is next directed to Fig. 2, which depicts a graph 200 of intensity, in arbitrary units, vs. wavelength of light emitted by quantum dots 101, 102, and light sources 103. While the intensities of spectra in graph 200 are all depicted as about the same, each spectra can be of a different relative intensity, and graph 200 is provided to show relative wavelength positions of each spectra; further each spectra of graph 200 is located at a relative wavelength position, however the exact position of each spectrum is not to scale. Further graph 200 ranges from about 380 nm to about 750 nm, and/or a range of wavelengths that is visible to human beings and/or an average human being.

Quantum dots 101 are configured and/or chosen to emit light at wavelengths (λ_{S1}, λ_{M1}, λ_{L1}), and quantum dots 102 are configured and/or chosen to emit light at wavelengths (λ_{S2}, λ_{M2}, λ_{L2}). For example, quantum dots 101-1 can be chosen to emit a wavelength λ_{S1}, quantum dots 102-1 can be chosen to emit a wavelength λ_{S2} different from λ_{S1}, quantum dots 101-2 can be chosen to emit a wavelength λ_{M1}, quantum dots 102-2 can be chosen to emit a wavelength λ_{M2} different from λ_{M1}, quantum dots 101-3 can be chosen to emit a wavelength λ_{L1}, and quantum dots 102-3 can be chosen to emit a wavelength λ_{L2} different from λ_{L1}.

Each of wavelengths λ_{S1}, λ_{M1}, λ_{L1}, λ_{S2}, λ_{M2}, λ_{L2} is chosen to be a respective primary colour, including, but not limited to, red, green and blue. Specifically, as depicted, λ_{S1}, λ_{S2} are chosen to be blue, λ_{M1}, λ_{M2} are chosen to be green, λ_{L1}, λ_{L2} are chosen to be red (e.g. "S" stands for short, "M" stands for medium, and "L" stands for long, as λ_{S1}, λ_{S2} are respectively shorter than λ_{M1}, λ_{M2}, which are respectively shorter than λ_{L1}, λ_{L2}).

However, λ_{S1}, λ_{S2} are chosen to be different blues, λ_{M1}, λ_{M2} are chosen to be different greens, and λ_{L1}, λ_{L2} are chosen to be different reds. In other words, while each of λ_{S1}, λ_{S2} are both blue, λ_{S1} is not equal to λ_{S2}; similarly, while each of λ_{M1}, λ_{M2} are both green, λ_{M1} is not equal to λ_{M2}; and, while each of λ_{L1}, λ_{L2} are both red, λ_{L1} is not equal to λ_{L2}. However, each pair of wavelengths in the blue, green, and red spectra is further chosen to be generally indistinguishable by the human eye, and/or by an average human eye, however their bandwidths generally do not overlap. In other words, each set of quantum dots 101, 102 emit a slightly different set of colour primaries.

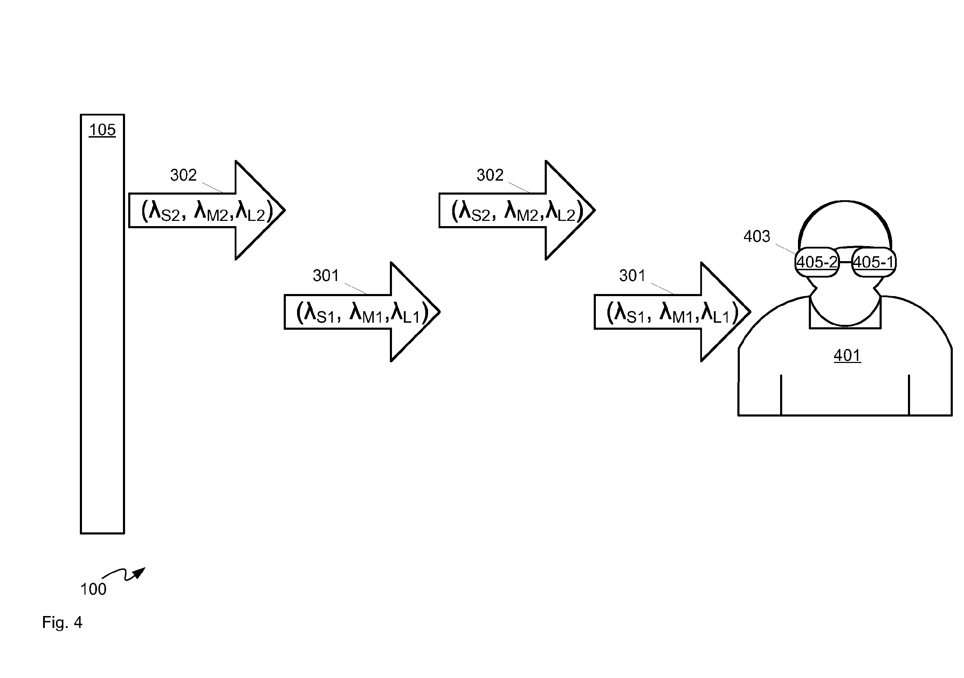

Indeed, quantum dots can be tuned so that light emitted there from, when excited, has a narrow bandwidth. Hence, quantum dots are used in system 100 so that different images can be formed by image modulator 105 from wavelengths (λ_{S1}, λ_{M1}, λ_{L1}), and wavelengths (λ_{S2}, λ_{M2}, λ_{L2}), for example, to form left eye images and right eye images in a 3D system, whose colours are generally indistinguishable by the human eye, but can be filtered using optical filters, as described below with respect to Figs. 4 to 6.

Light sources 103 each emit light at an excitation wavelength λ_{X}, excitation wavelength λ_{X} generally shorter than wavelengths λ_{S1}, λ_{M1}, λ_{L1}, λ_{S2}, λ_{M2}, λ_{L2}, and/or similar to wavelengths λ_{S1}, λ_{S2}.

Hence, excitation wavelength λ_{X} can be in a range of violet to blue, and/or less than or about equal to wavelengths λ_{S1}, X_{S2}. Each of light sources 103 can comprise one or more of: a light emitting diode (LED) configured to emit light less than or equal to the shorter of wavelengths λ_{S1}, λ_{S2}, and/or a blue LED, and/or a laser configured to emit light less than or equal to the shorter of wavelengths λ_{S1}, λ_{S2}, and/or a blue laser. In other words, each of quantum dots 101, 102 down-convert wavelength λ_{X} to respective wavelengths (λ_{S1}, λ_{M1}, λ_{L1}), (λ_{S2}, λ_{M2}, λ_{L2}).

Hereafter, wavelengths (λ_{S1}, λ_{M1}, λ_{L1}) will interchangeably be referred to as first set of primary colours (λ_{S1}, λ_{M1}, λ_{L1}) and/or primary colours (λ_{S1}, λ_{M1}, λ_{L1}), and wavelengths (λ_{S2}, λ_{M2}, λ_{L2}) will interchangeably be referred to as second set of primary colours (λ_{S2}, λ_{M2}, λ_{L2}) and/or primary colours (λ_{S2}, λ_{M2}, λ_{L2}).

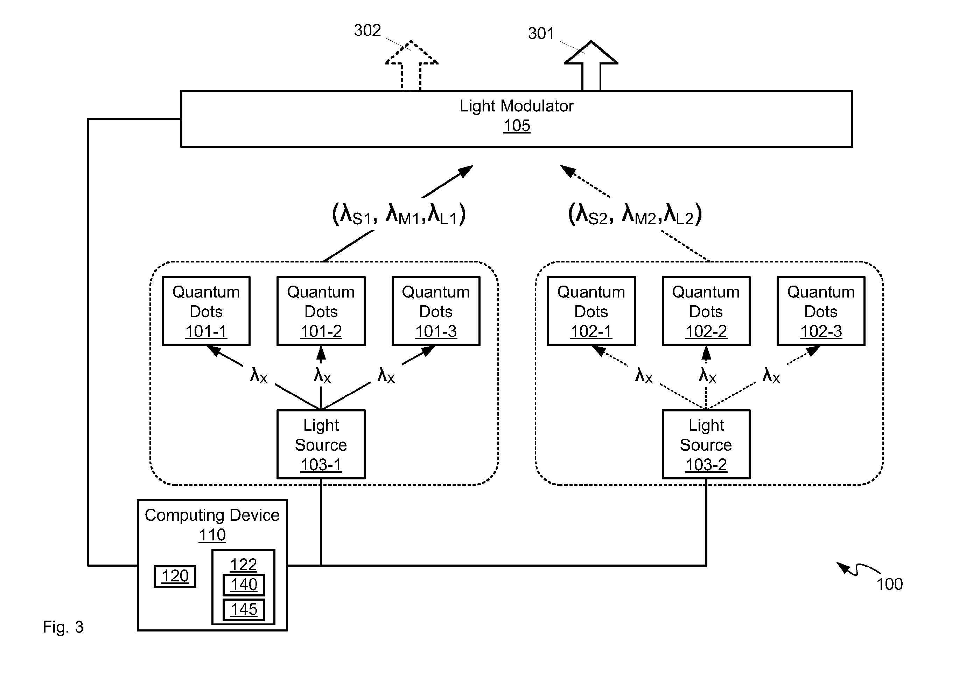

For example, attention is next Fig. 3, which is substantially similar to Fig.1, with like elements having like numbers. Fig. 3 depicts system 100 in operation. Specifically, computing device 110 is configured to: control first light source 103-1 and second light source 103-2 to alternate irradiating first set of quantum dots 101 and second set of quantum dots 102; and synchronize light modulator 105 with first light source 103-1 and second light source 103-2 to form a first image 301 when being illuminated by the first set of primary colours (λ_{S1}, λ_{M1}, λ_{L1}) and form a second image 302 when being illuminated by the second set of primary colours (λ_{S2}, λ_{M2}, λ_{L2}). Computing device 110 controlling light sources 103 and light modulator 105 in this manner can occur via processor 120 processing image data 140 and application 145. First image 301 and second image 302 can each comprise a plurality of respective images; furthermore, each of first image 301 and second image 302 can each correspond to data stored at image data 140.

While Fig. 3 depicts quantum dots 101, 102 being illuminated simultaneously, respectively, by light sources 103-1, 103-2, and images 301, 302 being formed by light modulator 105 simultaneously, in practise, computing device 110 first controls light source 103-1 to turn on and/or irradiate quantum dots 101, and controls pixels of image modulator 105 to modulate the first set of primary colours (λ_{S1}, λ_{M1}, λ_{L1}) into first image 301; computing device 110 then turns off light source 103-1/or blocks irradiation of quantum dots 101, and then controls light source 103-2 to turn on and/or irradiate quantum dots 102, and controls pixels of image modulator 105 to modulate the second set of primary colours (λ_{S2}, λ_{M2}, λ_{L2}) into second image 302. Computing device 110 controls system 100 to alternate between these two configurations to alternate forming first image 301 comprising the first set of primary colours (λ_{S1}, λ_{M1}, λ_{L1}), and forming second image 302 comprising the second set of primary colours (λ_{S2}, λ_{M2}, λ_{L2}).

Furthermore, in some implementations, each of quantum dots 101-1, 101-2, 101-3, 102-1, 102-3, 102-3 are illuminated in a sequence in order to produce each of wavelengths (λ_{S1}, λ_{M1}, λ_{L1}), (λ_{S2}, λ_{M2}, λ_{L2}) in a sequence, and pixels of light modulator 105 are controlled to form corresponding respective blue, green and red sub-images of first image 301 and second image 302 in a sequence, at a rate that is perceived by the human eye as first image 301 and second image 302, and not individual sub-images. For example the rate can be in a range of about 20 Hz to greater than about 240 Hz.

Attention is next directed to Fig. 4, which depicts a user-centric schematic view of system 100; in Fig. 4, while quantum dots 101, 102 and light sources 103 are not depicted, they are understood to be nonetheless present. Fig. 4 specifically depicts a sequence of images 301, 302, respectively comprising the first set of primary colours (λ_{S1}, λ_{M1}, λ_{L1}), and the second set of primary colours (λ_{S2}, λ_{M2}, λ_{L2}), alternately being formed by light modulator 105 and viewed by a user 401.

As depicted in Fig. 4, system 100 can further comprise at least one pair of eyewear 403 comprising a first lens 405-1 configured to transmit the first set of primary colours (λ_{S1}, λ_{M1}, λ_{L1}) and block the second set of primary colours (λ_{S2}, λ_{M2}, λ_{L2}), and a second lens 405-2 configured to transmit the second set of primary colours (λ_{S2}, λ_{M2}, λ_{L2}) and block the first set of primary colours(λ_{S1}, λ_{M1}, λ_{L1}), first lens 405-1 comprising one of a left eye lens and a right eye lens (as depicted the left eye lens), and second lens 405-2 comprising an other of the left eye lens and the right eye lens (as depicted the right eye lens).

Similarly, first image(s) 301 comprises one of a left eye image and a right eye image, and second image(s) 302 comprises an other of the left eye image and the right eye image: hence, user 401 sees images 301 (e.g. left eye images) through first lens 405-1, and images 302 (e.g. the right eye images) through second lens 405-2. When images 301, 302 comprise a stereoscopic pair of images, user 401 experiences images 301, 302 as a three-dimensional image.

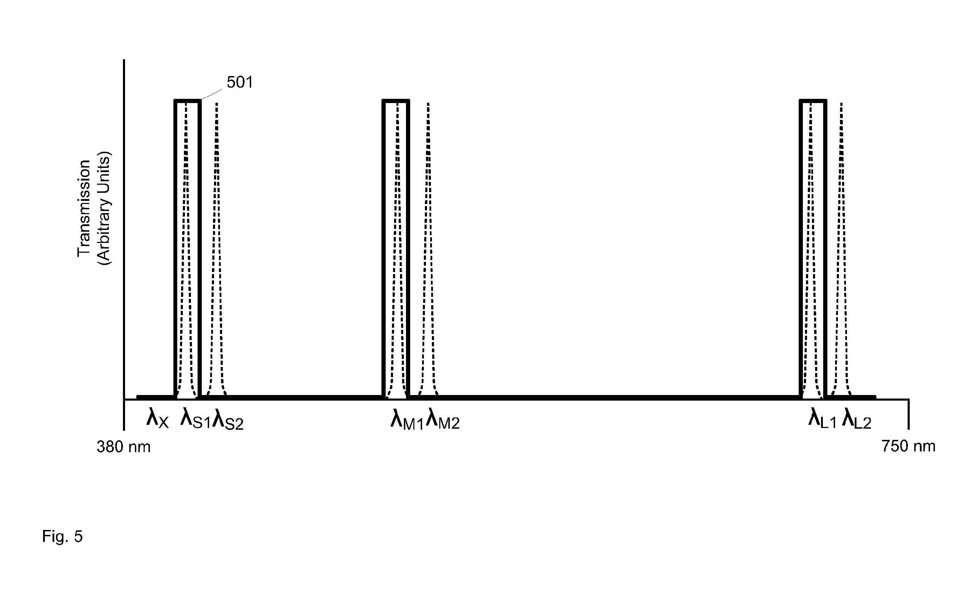

In some implementations, each of first lens 405-1 and second lens 405-2 can comprise a respective dichroic filter each configured to filter respective wavelengths. For example, attention is directed to Fig. 5 which depicts a transmission profile 501 of first lens 405-1 as a function of wavelength over the same wavelength range depicted in Fig. 2, in implementations where first lens 405-1 is configured to transmit the first set of primary colours (λ_{S1}, λ_{M1}, λ_{L1}) and block the second set of primary colours (λ_{S2}, λ_{M2}, λ_{L2}),: specifically, dichroics at first lens 405-1 comprise a narrow band pass filter configured to transmit wavelengths (λ_{S1}, λ_{M1}, λ_{L1}) and block wavelengths (λ_{S2}, λ_{M2}, λ_{L2}). Alternatively, rather than dichroic filters, absorption filters could be used, though absorption filters tuned to the specific wavelengths can be less efficient than dichroic filters.

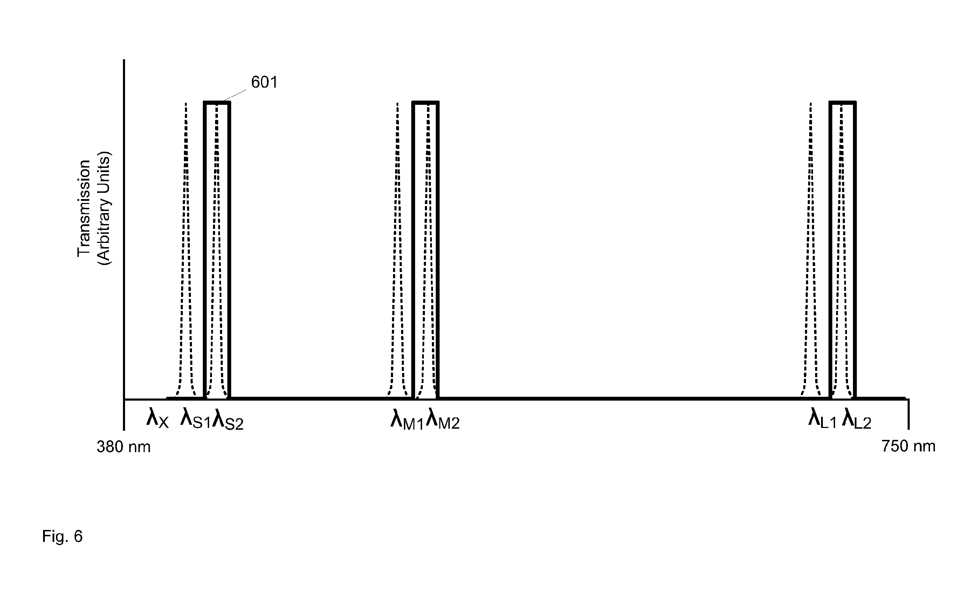

Similarly, attention is directed to Fig. 6 which depicts a transmission profile 601 of second lens 405-2 as a function of wavelength over the same wavelength range depicted in Fig. 2, in implementations where second lens 405-2 is configured to transmit the second set of primary colours (λ_{S2}, λ_{M2}, λ_{L2}) and block the first set of primary colours (λ_{S1}, λ_{M1}, λ_{L1}),: specifically, dichroics at second lens 405-2 comprise a narrow band pass filter configured to transmit wavelengths (λ_{S2}, λ_{M2}, λ_{L2}) and block wavelengths (λ_{S1}, λ_{M1}, λ_{L1}).

Comparing Figs. 5 and 6, it is apparent that first lens 405-1 and second lens 405-2 have complementary transmission profiles to minimize cross-talk between them. In this manner, three-dimensional images are viewed by user 401.

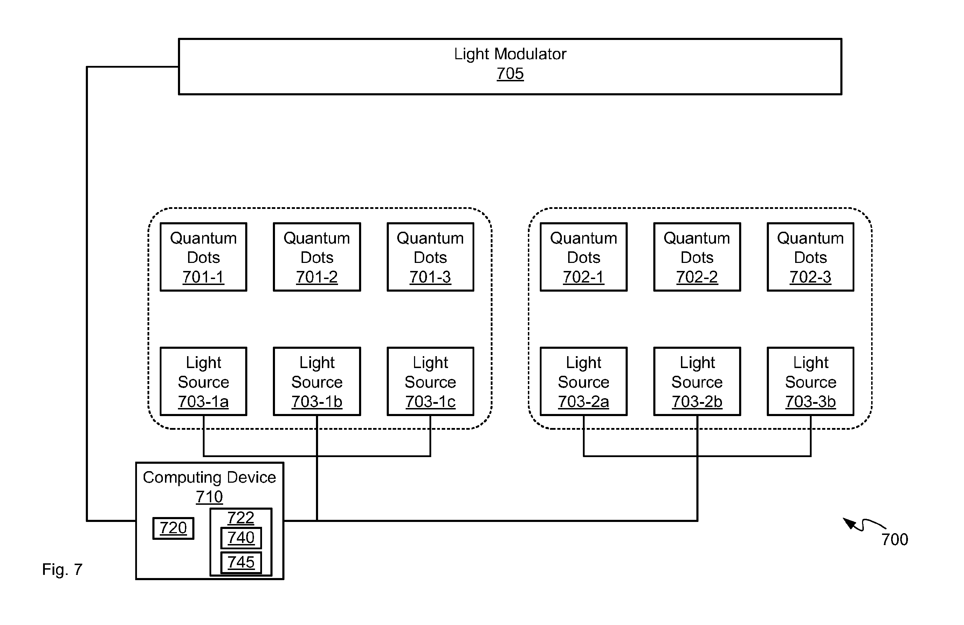

Attention is next directed to Fig. 7 which depicts a system 700, which is substantially similar to system 100, with like elements having like number with, however, a number of each element starting with "7" rather than "1". Hence, system 700 comprises: a first set of quantum dots 701-1, 701-2, 701-3 configured to emit light comprising a first set of primary colours when excited; a second set of quantum dots 702-1, 702-2, 702-3 configured to emit further light comprising a second set of primary colours when excited, the first set of primary colours and the second set of primary colours corresponding to one another, respective wavelengths of a given primary colour in each of the first set of primary colours and the second set of primary colours different from one another, as described in more detail below; one or more light sources 703-1a, 703-1b, 703-1c, 703-2a, 703-2b, 703-2c configured to irradiate first set of quantum dots 701-1, 701-2, 701-3 and second set of quantum dots 702-1, 702-2, 702-3with an excitation wavelength so that the first set of primary colours and the second set of primary colours are emitted; and, a light modulator 705 positioned for irradiation by the first set of primary colours and the second set of primary colours, light modulator 705 configured to form a first image from the first set of primary colours and a second image from the second set of primary colours, as described in more detail below. As depicted, system 700 further comprises a computing device 710 in communication with one or more light sources 703-1a, 703-1b, 703-1c, 703-2a, 703-2b, 703-2c and light modulator 705, computing device 710 configured to control one or more light sources 703-1, 703-2, and light modulator 705 as described in more detail below.

First set of quantum dots 701-1, 701-2, 701-3 will be interchangeably referred to, collectively, hereafter as quantum dots 701, and generically as quantum dots 701; similarly, second set of quantum dots 702-1, 702-2, 702-3 will be interchangeably referred to, collectively, hereafter as quantum dots 702, and generically as quantum dots 702. One or more light sources 703-1a, 703-1b, 703-1c, 703-2a, 703-2b, 703-2c will be interchangeably referred to, collectively, hereafter as light sources 703, and generically as a light source 703.

Computing device 710 can comprise a processor 720, a memory 722, and alternatively a communication interface and/or input device (not depicted), memory 722 storing image data 740, image data 740 generally comprising images which can be formed by pixels of image modulator 705. Memory 722 further stores an application 745 that, when processed by processor 720, enables processor 720 to control light sources 703 and light modulator, as described in further detail below. Furthermore, memory 722 storing application 745 is an example of a computer program product, comprising a non-transitory computer usable medium having a computer readable program code adapted to be executed to implement a method, for example a method stored in application 745.

Similar to system 100, in system 700, first set of quantum dots 701 comprises: a first quantum dot subset 701-1 configured to emit a first primary colour; a second quantum dot subset 701-2 configured to emit a second primary colour; and a third quantum dot subset 701-3 configured to emit a third primary colour; and, second set of quantum dots 702 comprises: a first respective quantum dot subset 702-1 configured to emit a first respective primary colour; a second respective quantum dot 702-2 subset configured to emit a second respective primary colour; and a third respective quantum dot subset 702-3 configured to emit a third respective primary colour. For example, each of the first primary colour, and the first respective primary colour can comprise blue at wavelengths λ_{S1}, λ_{S2}, respectively, as described above; similarly, each of the second primary colour, and the second respective primary colour can comprise green at wavelengths λ_{M1}, λ_{M2}, respectively as described above; and each of the third primary colour, and the third respective primary colour can comprise red at wavelengths λ_{L1}, λ_{L2}, respectively, as described above.

Hence, first primary colour will be interchangeably referred to hereafter as first primary colour λ_{S1}, first respective primary colour will be interchangeably referred to hereafter as first respective primary colour λ_{S2}, second primary colour will be interchangeably referred to hereafter as second primary colour λ_{M1}, second respective primary colour will be interchangeably referred to hereafter as second respective primary colour λ_{M2}, third primary colour will be interchangeably referred to hereafter as third primary colour λ_{L1}, and third respective primary colour will be interchangeably referred to hereafter as third respective primary colour λ_{L1}.

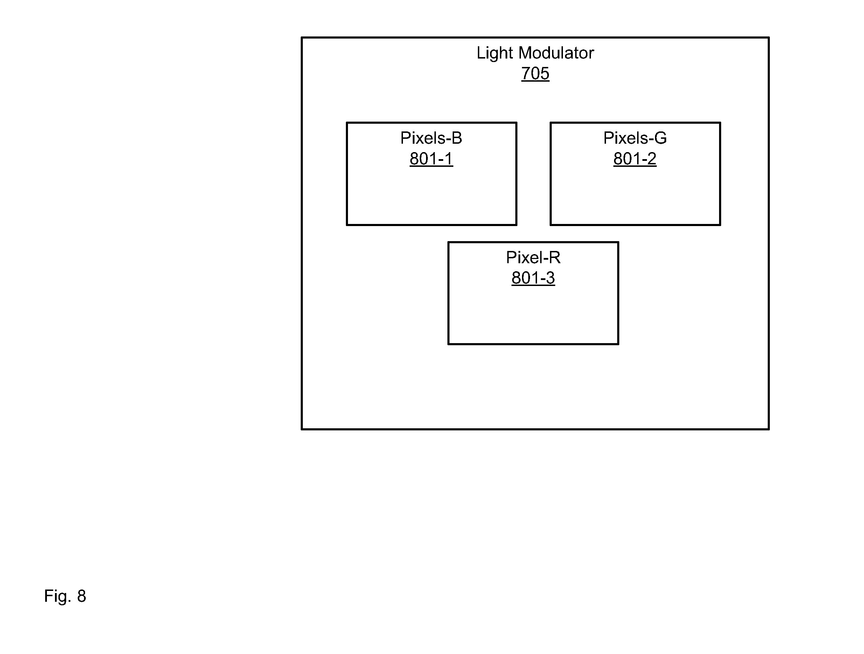

Attention is next directed to Fig. 8, which depicts schematic details of light modulator 705. Specifically light modulator 705 comprises: a first subset of pixels 801-1 for modulating the first primary colour λ_{S1} and the first respective primary colour λ_{S2} to form respective first sub-images of the first image and the second image; a second subset of pixels 801-2 for modulating the second primary colour λ_{M1} and the second respective primary colour λ_{M2} to form respective second sub-images of the first image and the second image; and, a third subset of pixels 801-3 for modulating the third primary colour λ_{L1} and the third respective primary colour λ_{L2} to form respective third sub-images of the first image and the second image. In other words, first subset of pixels 801-1 can be formed into blue sub-images using image data 740, second subset of pixels 801-2 can formed into green sub-images using image data 740, and third subset pixels 801-3 can formed into red sub-images using image data 740. Hence, first subset of pixels 801-1 are also labelled "B" for blue, second subset of pixels 801-2 are also labelled "G" for green, and third subset of pixels 801-3 are also labelled "R" for red.

Subsets of pixels 801-1, 801-2, 801-3 will be interchangeably referred to, collectively, hereafter as sub-pixels 801, and generically as a sub-pixel 801.

While sub-pixels 801 are depicted as grouped together, the depicted grouping is for illustration purposes only; rather, each subset of pixels 801 are distributed over a surface of light modulator 705, for example as micromirrors, LCD pixels and the like. For example, each pixel of light modulator 705 comprises: a sub-pixel 801-1, a sub-pixel 801-2, and a sub-pixel 801-3, i.e. a blue sub-pixel, a green sub-pixel and a red sub-pixel.

Returning to Fig. 7, it is apparent that one or more light sources 703 comprises a plurality of light sources 703 in a one-to-one relationship with each colour in the first set of primary colours and the second set of primary colours, and/or in a one-to-one relationship with sets of quantum dots 701, 702. In other words, as depicted, there are six sets of quantum dots 701, 702, and six light sources 703, one for each set of quantum dots 701, 702; further, a specific set of quantum dots 701, 702 can be excited to emit an associated primary colour by activating and/or turning on an associated light source 703.

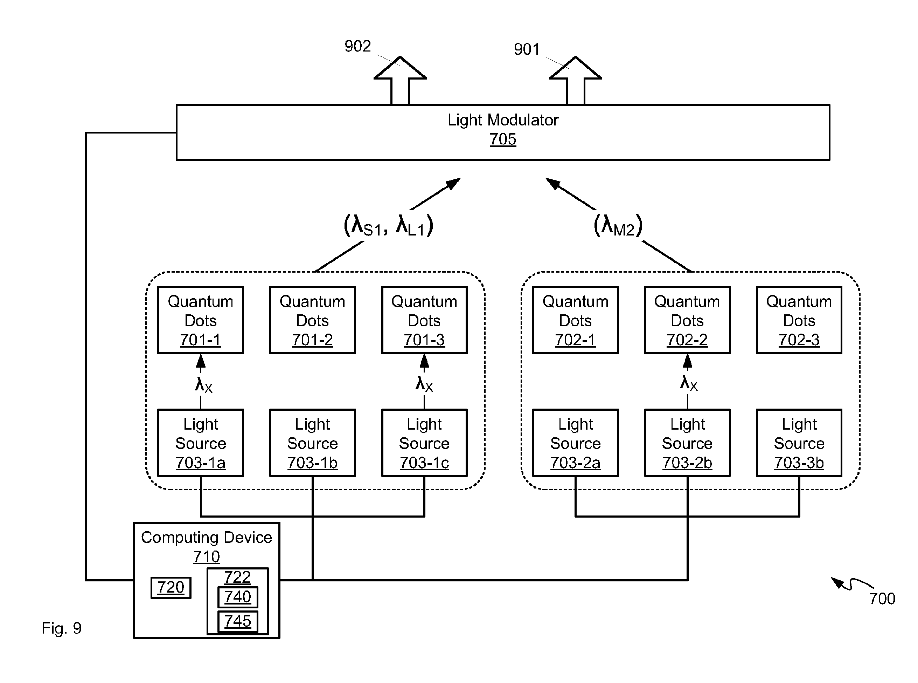

For example, with reference to Fig. 9, which is substantially similar to Fig. 7, with like elements having like numbers, quantum dots 701-1, 701-3 can be excited by turning on respective light sources 703-1a, 703-1c, and quantum dots 702-2 can be excited by turning on respective light source 703-2b. Hence, quantum dots 701-1, 701-3 can be excited to emit primary colours λ_{S1}, λ_{L1} in conjunction with exciting quantum dots 702-2 to emit a complimentary primary colour λ_{M2}. In other words, when quantum dots 701-1, 701-3 emit blue and red light respectively, quantum dots 702-2 can emit complimentary green light, though at a wavelength λ_{M2} in the second set of primary colours (λ_{S2}, λ_{M2}, λ_{L2}). Wavelengths (λ_{S1}, λ_{M2}, λ_{L1}) can be modulated by light modulator 705 into sub-images 901, 902 with pixels 801-1, 801-3 modulating primary colours (λ_{S1}, λ_{L1}) into a sub-image 901 of, for example, a left eye image, and pixels 801-2 modulating complimentary primary colour λ_{M2} into a sub-image 902 of, for example, a right eye image.

Hence, light modulator 705 can form a blue sub-image and a red sub-image of a left eye image (i.e. sub-image 901 comprises a combination of the blue sub-image and the red sub-image of a left eye image), and in conjunction forms a green-sub-image of a right eye image (i.e. sub-image 902 comprises the green sub-image of a right eye image).

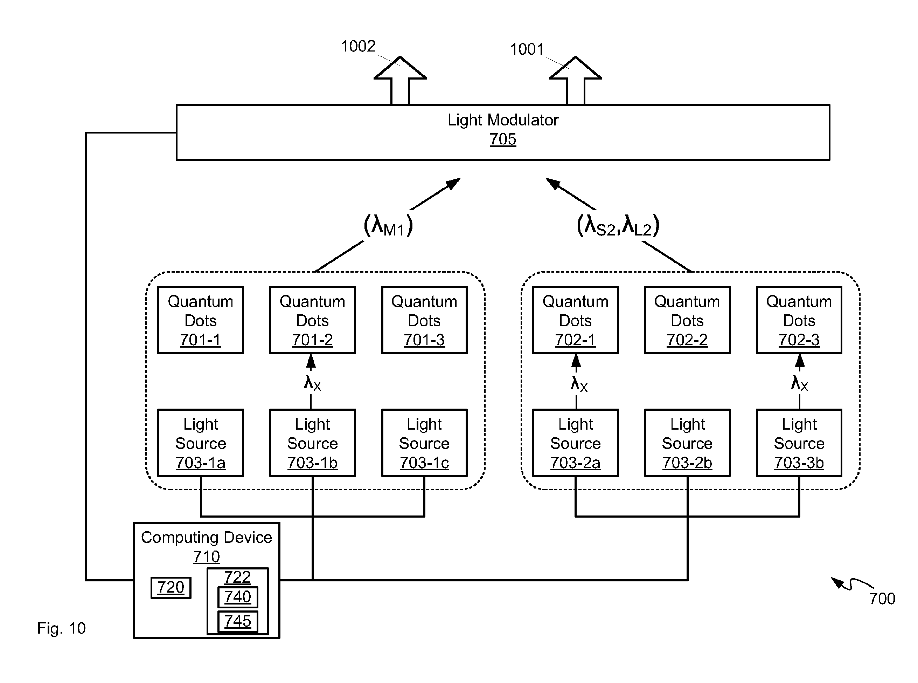

Similarly, with reference to Fig.10, which is substantially similar to Fig. 7, with like elements having like numbers, quantum dots 702-1, 702-3 can be excited by turning on respective light sources 703-1a, 703-1c, and quantum dots 701-2 can be excited by turning on respective light source 703-1b. Hence, quantum dots 701-2 can be excited to emit a complimentary primary colour λ_{M1} in conjunction with exciting quantum dots 702-1, 702-3 to emit a primary colours λ_{S2}, X_{L2}. Hence, quantum dots 702-1, 702-3 can be excited to emit primary colours λ_{S2}, λ_{L2} in conjunction with exciting quantum dots 701-2 to emit a complimentary primary colour λ_{M1}. In other words, when quantum dots 702-1, 702-3 emit blue and red light respectively, quantum dots 701-2 can emit complimentary green light, though at a wavelength λ_{M1} in the first set of primary colours (λ_{S1}, λ_{M1}, λ_{L1}). Wavelengths (λ_{S2}, λ_{M1}, λ_{L2}) can be modulated by light modulator 705 into sub-images 1001,1002 with pixels 801-1, 801-3 modulating primary colours (λ_{S2}, λ_{L2}) into a sub-image 1002 of, for example, a right eye image, and pixels 801-2 modulating complimentary primary colour λ_{M1} into a sub-image 1001 of, for example, a left eye image.

Hence, light modulator 705 forms a blue sub-image and a red sub-image of a right eye image (i.e. sub-image 1002 comprises a combination of the blue sub-image and the red sub-image of a right eye image), and in conjunction forms a green-sub-image of a left eye image (i.e. sub-image 1001 comprises the green sub-image of a left eye image).

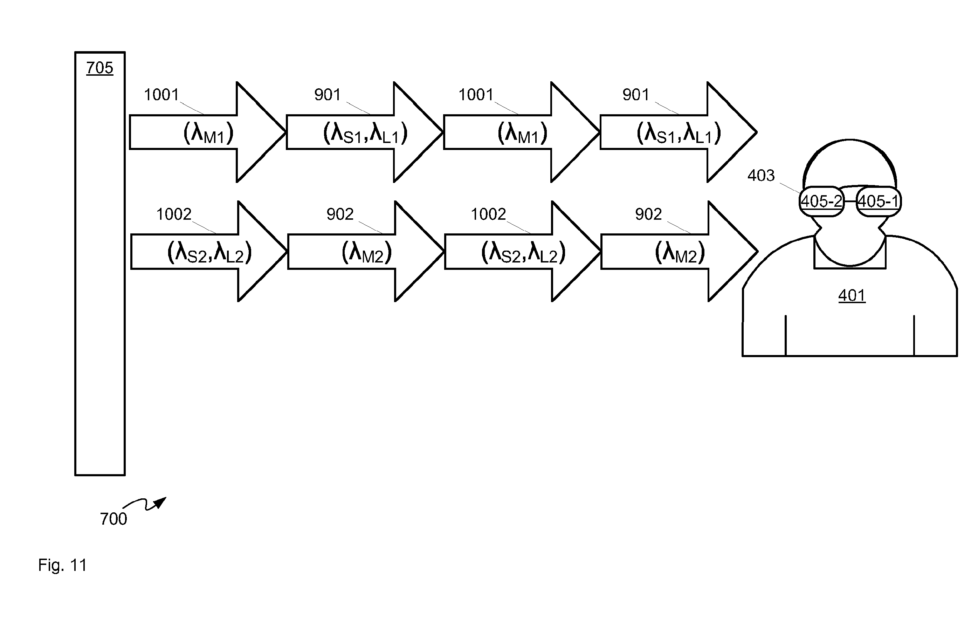

Further, computing device 710 controls system 700 to alternate between these two states, e.g. via processor 720 processing image data 740 and application 745. For example, attention is next directed to Fig. 11, which depicts a user-centric schematic view of system 700; in Fig. 4, while quantum dots 701, 702 and light sources 703 are not depicted, they are understood to be nonetheless present. Fig. 11 specifically depicts a sequence of sub-images 901, 902, and 1001, 1002 being alternately being formed by light modulator 105 and viewed by a user 401. Sub-images 901, 902 respectively comprise a subset (λ_{S1}, λ_{L1}) of the first set of primary colours, and a subset (λ_{M2}) of the second set of primary colours, while sub-images 1001, 1002 respectively comprise a subset (λ_{M1}) of the second set of primary colours, and a subset (λ_{S2}, λ_{L2}) of the first set of primary colours.

Further, user 401 is wearing eyewear 403 as described above. When sub-images 901, 902 are viewed through eyewear, sub-image 901 is viewed by the left eye through first lens 405-1, while sub-image 902 is viewed by the right eye through second lens 405-2, as described above; similarly, when sub-images 1001, 1002 are viewed through eyewear, sub-image 1001 is viewed by the left eye through first lens 405-1, while sub-image 1002 is viewed by the right eye through second lens 405-2. The user's brain will combine sub-images 901 with sub-image 1001 to form a left eye image, and further combine sub-images 902 with sub-image 1002 to form a right eye image. However, in contrast to system 100, which explicitly alternates between a a left eye image and a right eye image, so that each eye experiences a period of time where an image is not being viewed, in system 700 each eye of user 401 is receiving images and/or sub-images at twice the rate as system 100, which can reduce perceived flicker of images in comparison to system 100.

Put another way, and returning to Fig. 7, it is apparent that the one or more light sources 703 comprise: one or more first light sources 703-1a 703-1c configured to irradiate a quantum dot subset 701-1 and quantum dot subset 701-3; and, a second light source 703-1b configured to irradiate quantum dot subset 701-2; and, one or more third light sources 703-2a, 703-2c configured to irradiate a respective quantum dot subset 702-1 and a respective quantum dot subset 702-3; and, a fourth light source 703-2b configured to irradiate a respective quantum dot subset 702-2, each of the one more first light sources 703-1a 703-1c, second light source 703-1b, the one or more third light sources 703-2a 703-2c, and fourth light source 703-2b operable independent of each other.

In some implementations, light sources 703-1a 703-1c can be combined into a single light source and quantum dots 701-1, 701-3 arranged for irradiation by the single light source; in some of these implementations, system 700 can comprise a moveable mirror for alternating irradiation of the light source between quantum dots 701-1, 701-3. Similarly, in some implementations, light sources 703-2a 703-2c can be combined into a single light source and quantum dots 702-1, 702-3 arranged for irradiation by the single light source; in some of these implementations, system 700 can comprise a moveable mirror for alternating irradiation of the light source between quantum dots 702-1, 702-3.

In some implementations, irradiation of quantum dots 701-1, 701-3, 702-2 occurs simultaneously, with optics between quantum dots 701, 702 and light modulator 705 directing respective light to light modulator 705 to form sub-images 901, 1001, while in other implementations, irradiation of dots 701-1, 701-3, 702-2 occurs in a sequence, with each sub-image 901, 1001 at light modulator 705 being formed in a sequence, synchronized with emission of the respective primary colours.

Similarly, in some implementations, irradiation of quantum dots 701-2, 702-1, 702-3 occurs simultaneously, with optics between quantum dots 701, 702 and light modulator 705 directing respective light to light modulator 705 to form sub-images 902, 1002, while in other implementations, irradiation of dots 701-2, 702-1, 702-3 occurs in a sequence, with each sub-image 902, 1002 at light modulator 705 being formed in a sequence, synchronized with emission of the respective primary colours.

Further, in implementations depicted in Figs. 7 to 11, computing device 710 is configured to: control the one or more light sources 703 to alternate between: irradiating quantum dot subset 701-1 and quantum dot subset 701-3 with one or more first light sources 703-1a, 703-1c, and irradiating respective quantum dot subset 702-2 with fourth light source 703-2b to produce primary colour λ_{S1} and primary colour λ_{L1} from first set of quantum dots 701, and respective primary colour λ_{M2} from second set of quantum dots 702; and, irradiating respective quantum dot subset 702-1 and respective quantum dot subset 702-3 with one or more third light sources 703-2a, 703-3b, and irradiating quantum dot subset 701-2 with second light source 703-1b to produce the respective primary colour λ_{S2} and the respective primary colour λ_{L2} from second set of quantum dots 702, and the primary colour λ_{M1} from first set of quantum dots 701.

Computing device 710 is further configured to: synchronize light modulator 705 with one or more light sources 703 to alternate between: modulating subset of pixels 801-1 to form a first sub-image of the first image, modulating subset of pixels 801-3 to form a second sub-image of the first image, and modulating subset of pixels 801-2 to form a respective third sub-image of the second image, when light modulator 705 is illuminated by primary colour λ_{S1} and the primary colour λ_{M1} from first set of quantum dots 701, and respective primary colour λ_{M2} from the second set of quantum dots 702; and, modulating subset of pixels 801-1 to form a respective first sub-image of the second image, modulating subset of pixels 801-3 to form a respective second sub-image of the second image, and modulating subset of pixels 801-2 to form a third sub-image of the first image, when light modulator 705 is illuminated by the respective primary colour λ_{S2} and the respective primary colour λ_{L2} from the second set of quantum dots 702, and the primary colour λ_{M1} from the first set of quantum dots 701.

While present implementations have been described with respect to combining blue and red sub-images of a left eye-image with a green sub-image of a right eye image, and vice versa, in other implementations, blue and green sub-images of a left eye-image can be combined with a red sub-image of a right eye image, and vice versa; or red and green sub-images of a left eye-image can be combined with a blue sub-image of a right eye image, and vice versa.

Present implementations describe systems in which materials, such as quantum dots, are used to alternately form stereoscopic left eye images and right eye images for 3D viewing, primary colours of each of the left eye images and right eye images being different so that they can be filtered using an optical filter, but similar so that the human eye does not perceive a difference between the colours. Frame rate can be manipulated by providing complimentary colour sub-images of each of the left eye images and right eye images in conjunction with one another.

Those skilled in the art will appreciate that in some implementations, the functionality of computing devices 110, 710 can be implemented using pre-programmed hardware or firmware elements (e.g., application specific integrated circuits (ASICs), electrically erasable programmable read-only memories (EEPROMs), etc.), or other related components. In other implementations, the functionality of computing device 110, 710 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., radio-frequency, microwave, infrared, free-space optical or other transmission schemes) or a combination thereof.

Persons skilled in the art will appreciate that there are yet more alternative implementations and modifications possible, and that the above examples are only illustrations of one or more implementations. The scope, therefore, is only to be limited by the claims appended hereto.

## Claims

1. A system comprising:
a first set of materials configured to emit light comprising a first set of primary colours when excited;
a second set of materials configured to emit further light comprising a second set of primary colours when excited, the first set of primary colours and the second set of primary colours corresponding to one another, respective wavelengths of a given primary colour in each of the first set of primary colours and the second set of primary colours different from one another;
one or more light sources configured to irradiate the first set of materials and the second set of materials with an excitation wavelength so that the first set of primary colours and the second set of primary colours are emitted; and,
a light modulator positioned for irradiation by the first set of primary colours and the second set of primary colours, the light modulator configured to form a first image from the first set of primary colours and a second image from the second set of primary colours.

2. The system of claim 1, wherein the one or more light sources comprises: a first light source configured to irradiate the first set of materials with the excitation wavelength and a second light source configured to irradiate the second set of materials with the excitation wavelength, wherein the first light source can be different from the second light source or the first light source can comprise the second light source.

3. The system of claim 2, further comprising a computing device configured to control the first light source and the second light source to alternate irradiating the first set of materials and the second set of materials; and synchronize the light modulator with the first light source and the second light source to form the first image when being illuminated by the first set of primary colours and form the second image when being illuminated by the second set of primary colours.

4. The system of any of claims 1 to 3, wherein the first image comprises one of a left eye image and a right eye image, and the second image comprises the other of the left eye image and the right eye image.

5. The system of any of claims 1 to 4, further comprising at least one pair of eyewear comprising a first lens configured to transmit the first set of primary colours and block the second set of primary colours, and a second lens configured to transmit the second set of primary colours and block the first set of primary colours, the first lens comprising one of a left eye lens and a right eye lens, and the second lens comprising the other of the left eye lens and the right eye lens.

6. The system of claim 5, wherein each of the first lens and the second lens comprises a respective dichroic filter each configured to filter respective wavelengths.

7. The system of any of claims 1 to 6, wherein:
the first set of materials comprises: a first material subset configured to emit a first primary colour; a second material subset configured to emit a second primary colour; and a third material subset configured to emit a third primary colour; and,
the second set of materials comprises: a first respective material subset configured to emit a first respective primary colour; a second respective material subset configured to emit a second respective primary colour; and a third respective material subset configured to emit a third respective primary colour.

8. The system of claim 7, wherein the light modulator comprises:
a first subset of pixels for modulating the first primary colour and the first respective primary colour to form respective first sub-images of the first image and the second image;
a second subset of pixels for modulating the second primary colour and the second respective primary colour to form respective second sub-images of the first image and the second image; and,
a third subset of pixels for modulating the third primary colour and the third respective primary colour to form respective third sub-images of the first image and the second image.

9. The system of claim 8, wherein the one or more light sources comprise:
one or more first light sources configured to irradiate the first material subset and the second material subset; and, a second light source configured to irradiate the third material subset; and,
one or more third light sources configured to irradiate the first respective material subset and the second respective material subset; and, a fourth light source configured to irradiate the third respective material subset, each of the one more first light sources, the second light source, the one or more third light sources, and the fourth light source operable independent of each other.

10. The system of claim 9, further comprising a computing device configured to:
control the one or more light sources to alternate between:
irradiating the first material subset and the second material subset with the one or more first light sources, and irradiating the third respective material subset with the fourth light source to produce the first primary colour and the second primary colour from the first set of materials, and the third respective primary colour from the second set of materials; and,
irradiating the first respective material subset and the second respective material subset with the one or more third light sources, and irradiating the third material subset with the second light source to produce the first respective primary colour and the second respective primary colour from the second set of materials, and the third primary colour from the first set of materials; and,
synchronize the light modulator with one or more light sources to alternate between:
modulating the first subset of pixels to form a first sub-image of the first image, modulating the second subset of pixels to form a second sub-image of the first image, and modulating the third subset of pixels to form a respective third sub-image of the second image, when the light modulator is illuminated by the first primary colour and the second primary colour from the first set of materials, and the third respective primary colour from the second set of materials; and,
modulating the first subset of pixels to form a respective first sub-image of the second image, modulating the second subset of pixels to form a respective second sub-image of the second image, and modulating the third subset of pixels to form a third sub-image of the first image, when the light modulator is illuminated by the first respective primary colour and the second respective primary colour from the second set of materials, and the third primary colour from the first set of materials.

11. The system of any of claims 1 to 10, wherein the one or more light sources comprises a plurality of light sources in a one-to-one relationship with each colour in the first set of primary colours and the second set of primary colours.

12. The system of any of claims 1 to 11, wherein the first set of primary colours comprises: a first red, a first green, and a first blue; and the second set of primary colours comprises: a second red, different from the first red, a second green, different from the first green, and a second blue, different from the first blue.

13. The system of any of claims 1 to 12, wherein the light modulator comprises a digital micromirror device (DMD), and system further comprises optics configured to convey the first set of primary colours and the second set of primary colours to reflect from the DMD to form the first image and the second image.

14. The system of any of claims 1 to 12, wherein the light modulator comprises a liquid crystal device (LCD), and system further comprises a optics configured to convey the first set of primary colours and the second set of primary colours to transmit through the LCD to form the first image and the second image.

15. The system of any of claims 1 to 14, wherein the one or more light sources comprise at least one of: a light emitting diode, a blue light emitting diode, a laser, a blue light emitting laser, and light source that emits light at a wavelength shorter than respective wavelengths of the first primary colours and the second primary colours.
